# EUROPEAN PATENT SPECIFICATION

(11) **EP 0 707 146 B1**
(45) Date of publication and mention of the grant of the patent: **12.11.1997**
(21) Application number: 94830484.5
(22) Date of filing: 13.10.1994
(51) Int. Cl.: F04B 7/00, G01F 11/02, F04B 9/02

(54) **Apparatus for metering pigments for paints and the like**
Apparat zum Dosieren von Pigmenten für Lacke und dergleichen
Appareil pour mesurer des pigments pour des peintures et produits similaires

(43) Date of publication of application: 17.04.1996
(73) Proprietor: FAST S.p.A., I-20092 - Cinisello Balsamo (Milano) (IT)
(72) Inventor: Neri, Giuseppe, c/o Fast S.p.A., I-20092 Cinisello Balsamo, Milano (IT)
(74) Representative: Cicogna, Franco

(56) References cited:
- DE-A- 3 206 141
- FR-A- 2 441 071
- US-A- 3 850 345
- US-A- 4 967 938
- US-A- 4 974 755

## Description

### BACKGROUND OF THE INVENTION

The present invention relates to an apparatus for metering pigments for paints and the like.

There are already known apparatus for metering pigments for paints and the like, which pigments are introduced into the paint materials, pre-set with base colours, so as to provide desired colour paints.

These prior apparatus, as illustrated in FR-A-2441071, usually comprise a plurality of vessels allowing to deliver metered amounts of pigments, said vessels being provided, at the metering outlets thereof, with three-way rotary valves or with blade valves.

Such an approach is affected by several drawbacks since pigment deposits are frequently left at the delivery nozzle.

This drawback, in particular, is due to the fact that, as a pigment delivery is shut-off, the metering operation can not be performed with the required accuracy; moreover, the formed deposits can prevent subsequent metering operations from being properly performed.

All the prior apparatus, actually, are affected by the above mentioned drawbacks since they do not allow to precisely meter the pigment amount being introduced into the paint.

### SUMMARY OF THE INVENTION

Accordingly, the aim of the present invention is to overcome the above mentioned drawbacks, by providing an apparatus for metering pigments for paints and the like, which comprises a new type of valve allowing to perfectly drain or clean the nozzle used for metering the pigment, while allowing a very accurate metering of the pigment without generating pigment deposits and the like.

Within the scope of the above mentioned aim, a main object is to provide such an apparatus which allows to perform a very accurate metering of the pigments, while preventing the pigments for dripping and which, moreover, is very reliable and safe in operation.

Another object of the present invention is to provide such a pigment metering apparatus which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by an apparatus for metering pigments for paints and the like, comprising a bearing framework thereon there is supported a rotary carousel, supporting in turn a plurality of pigment vessels, provided with a delivery assembly, characterized in that said delivery assembly comprises a valve element including a closure stem which can be arranged in a closing position, in which the pigment can not be delivered, an opening position, in which the pigment can be delivered, and a draining position, in which said stem partially projects from a delivery nozzle.

### BRIEF DESCRIPTION OF THE DRAWINGS

Further characteristics and advantages of the invention will become more apparent hereinafter from the following detailed disclosure of a preferred, though not exclusive, embodiment of an apparatus for metering pigments for paints and the like, which is illustrated, by way of an indicative, but not limitative, example, in the figures of the accompanying drawings, where:
Figure 1 is a schematic view illustrating the delivery or metering assembly in a closure position thereof;
Figure 2 illustrates the delivery assembly in an opening position thereof;
Figure 3 illustrates the delivery assembly in a draining position thereof;

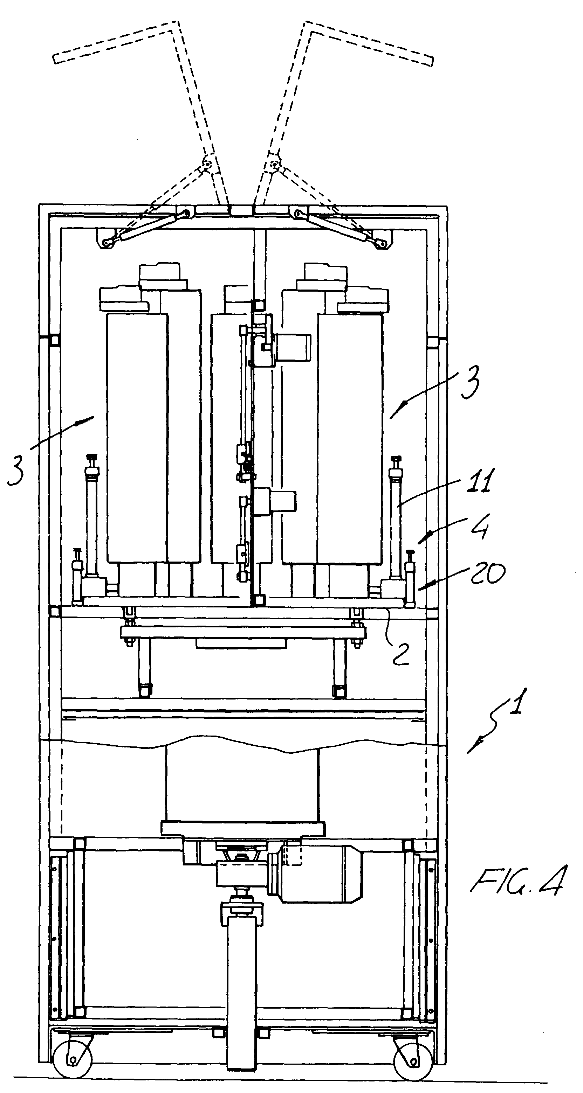

Figure 4 is a side elevation view of the subject apparatus;

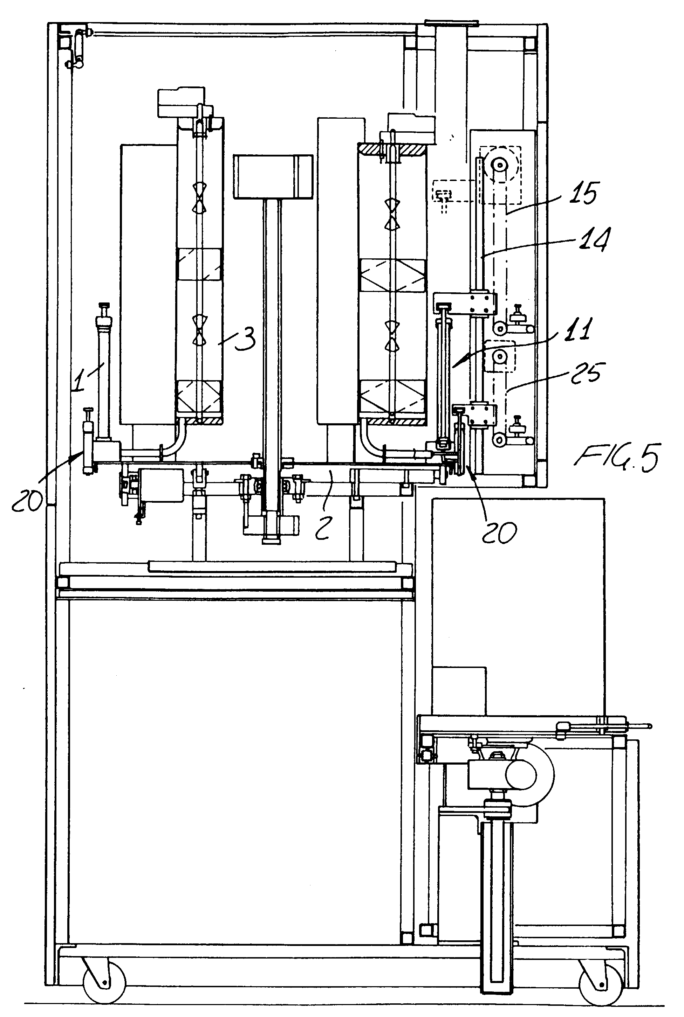

Figure 5 is a partial cross-sectional view illustrating several delivery assemblies included in the subject apparatus;

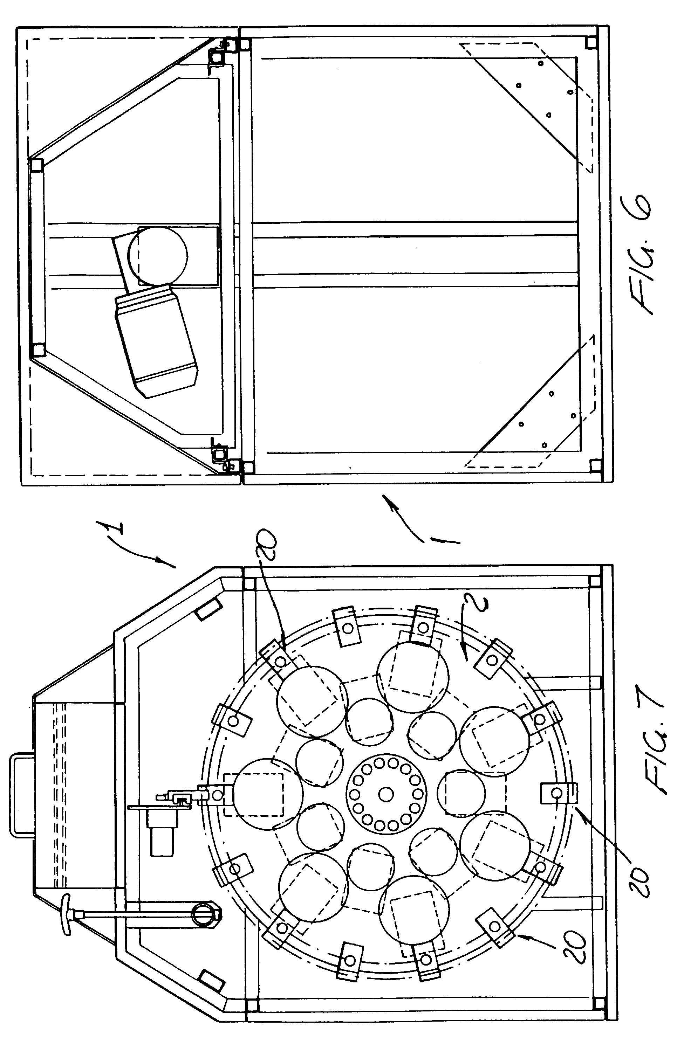

Figure 6 is a top plan view of the subject apparatus; and
Figure 7 is a bottom view of the apparatus, in which there is clearly illustrated the arrangement of the pigment vessels.

### DESCRIPTION OF THE PREFERRED EMBODIMENT

With reference to the number references of the above mentioned figures, the apparatus, for metering pigments for paints and the like, according to the present invention, comprises a bearing framework, generally indicated at the reference number 1, in which there is provided a carousel 2 which can turn step by step about a vertical axis, said carousel supporting a plurality of pigment vessels 3 each of which is provided with a delivery or metering assembly, generally indicated at the reference number 4, allowing a pigment to be properly delivered, in a set dose amount, at a pigment delivery station, generally indicated at the reference number 10.

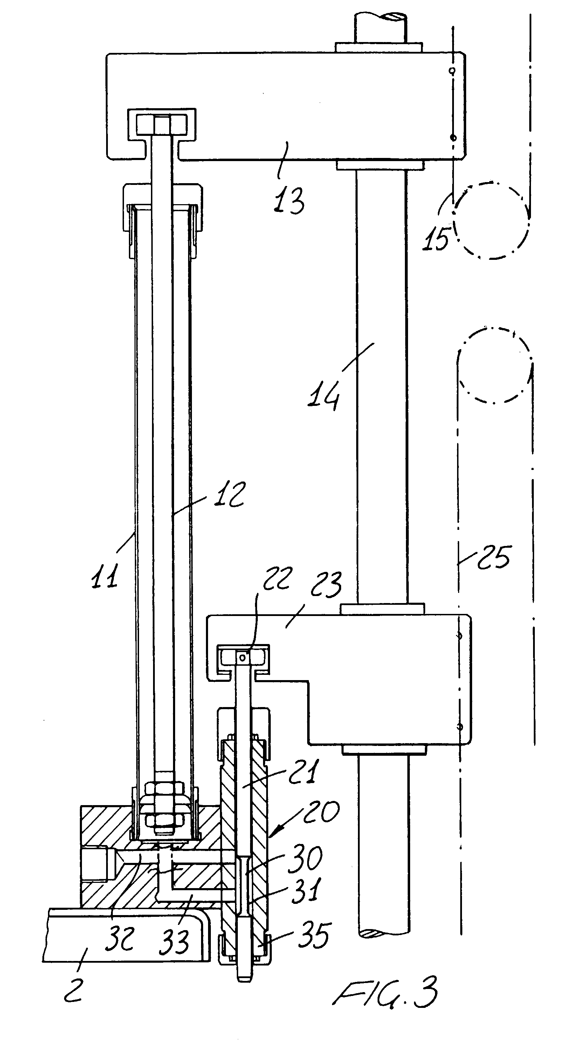

Each pigment delivery assembly, as is clearly shown in Figure 3, comprises a suction piston, indicated at 11, the piston rod 12 of which is connected at the top thereof to a driving block 13, which is slidably guided by an upright 14 and is connected to a ball circulation assembly 15, allowing the block to be precisely displaced, together with the piston rod 12 of the piston 11.

Near said piston 11 there is provided a valve element, generally indicated at the reference number 20, which is provided with a stem 21 including a head 22 which is connected to a movable block 23, which can also slide on the upright 14 and is connected to a second ball circulation assembly 25, provided for driving said block 23.

The stem 21 is provided, at a middle portion thereof, with a cut-out 30 providing, inside the chamber 31 in which the stem 21 can slide, a duct adapted to communicate the vessel 3 connecting duct 32 with the piston 11 connecting duct 33.

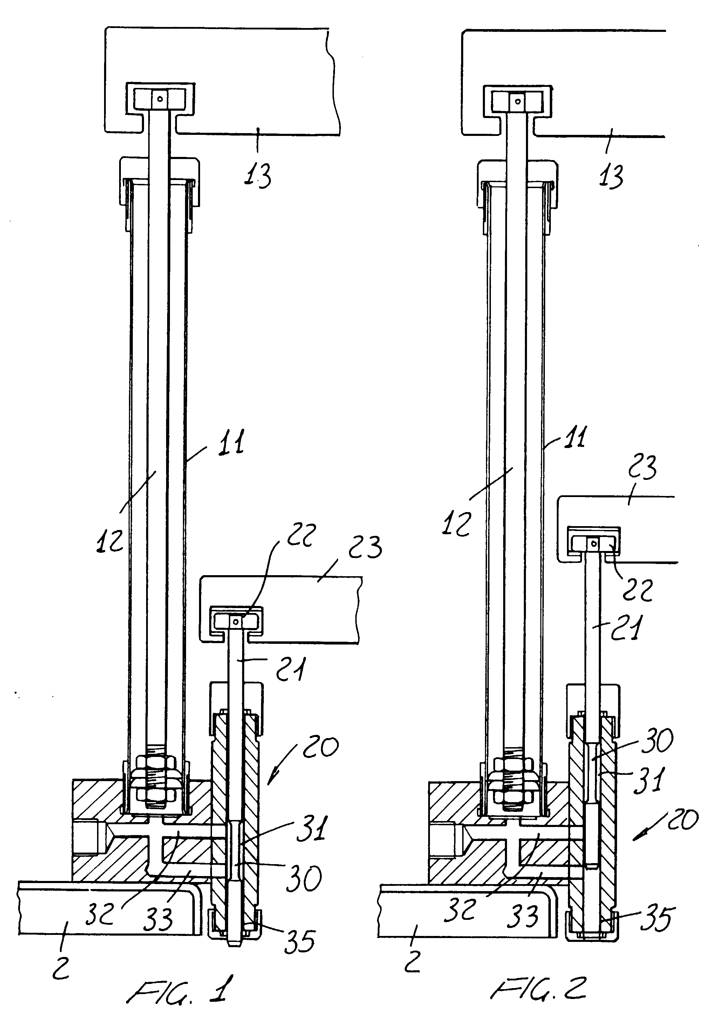

More specifically, the stem 21 can be displaced to a closure or closing position, shown in Figure 1, in which the stem will close the outside communicating nozzle 35, whilst the neck portion 30 will cause the channels 32 and 35 to communicate with one another, so as to allow the piston 11 to withdraw the pigment.

In an opening position, the stem 21 is caused to raise, so that its free end portions will uncover the port of the piston 11 communicating duct 33, so as to allow the piston to eject the pigment.

At the end of the pigment delivery step, the stem 21 is brought to a draining position, i.e. it is downwardly driven, so as to shut-off the communication with the outside and at least partially project from the port 35, to allow said stem to remove possible pigment residues thereby preventing deposits from forming and allowing a very accurate metered delivery of the pigment under all conditions.

From the above disclosure it should be apparent that the invention fully achieves the intended aim and objects.

In particular, the fact is to be pointed out that an apparatus has been provided in which the valve element 20, being provided with three positions, will allow to perform a full draining of the delivery port or nozzle, thereby preventing possible deposits from forming.

Moreover, the disclosed ball circulation construction for operating both the piston and the valve element will provide a very accurate and precise operation.

The invention, as disclosed, is susceptible to several variations and modifications, all of which will come within the scope of the inventive idea.

Moreover, all of the details can be replaced by other technically equivalent elements.

In practicing the invention, the used materials, provided that they are compatible to the intended use, as well as the contingent size and shapes, can be any, depending on requirements.

## Claims

1. An apparatus for metering pigments for paints and the like, comprising a bearing framework (1) whereon there is supported a rotary carousel (2), supporting in turn a plurality of pigment vessels (3), provided with a delivery assembly (4), characterized in that said delivery assembly comprises a valve element (20) including a closure stem (21) which can be arranged in a closing position, in which the pigment can not be delivered, an opening position, in which the pigment can be delivered, and a draining position, in which said stem partially projects from a delivery nozzle (35).

2. An apparatus, according to Claim 1, characterized in that said delivery assembly comprises a piston (11) for withdrawing the pigment for a related vessel (3), said piston including a movable piston rod (12) which is connected, at the top thereof, to a block (13) which can slide on a vertical upright (14) and being driven by a first ball circulation assembly (15) for driving said piston.

3. An apparatus, according to Claim 2, characterized in that said valve element is provided with a valve element stem (21) including a top head portion (22), connected to a movable block (23), which slides on said vertical upright, and being driven by a second ball circulation assembly (25).

4. An apparatus, according to Claim 3, characterized in that said stem (21) of said valve element is provided, at a middle portion thereof, with a cut-out (30) which can be arranged at the outlet of a duct (32) connected with said vessel and of a duct (33) connected with said piston, said latest duct communicating with the chamber in which said piston slides.

5. An apparatus, according to Claim 4, characterized in that as said stem (21) is in a closing position thereof, any communication with the outside is prevented, and said cut-out (30) is so arranged as to communicate with one another the vessel connecting duct (32) and the piston connecting duct (33).

6. An apparatus, according to Claim 4, characterized in that as said stem is in an opening position, one end portion of said stem closes the communicating port of the vessel connecting duct (32) and opens the piston communicating duct (33) port.

7. An apparatus, according to Claim 4, characterized in that as said stem is in a draining position, the end portion of said stem (21) projects from the pigment delivery port (35) to remove possible deposits from said delivery port.

## Patentansprüche

1. Eine Anlage zur Dosierung von Farbpigmenten und dergleichen, ein Tragegerüst (1) umfassend, das ein Drehkarussell (2) trägt, das seinerseits eine Vielzahl von Pigmentbehältern (3) trägt, die mit einer Abgabevorrichtung (4) ausgestattet sind, dadurch gekennzeichnet, daß diese Abgabevorrichtung ein Ventilteil (20) umfaßt, das einen Verschlußschaft (21) einschließt, der in eine Schließposition gebracht werden kann, in der das Pigment nicht abgegeben werden kann, in eine Öffnungsposition, in der das Pigment abgegeben werden kann, und in eine Entleerungsposition, in der dieser Schaft teilweise von einer Abgabedüse (35) absteht.

2. Eine Anlage nach Anspruch 1, dadurch gekennzeichnet, daß diese Abgabevorrichtung einen Kolben (11) zur Entnahme des Pigments für einen zugehörigen Behälter (3) umfaßt, wobei dieser Kolben eine bewegliche Kolbenstange (12) einschließt, die an ihrem oberen Ende mit einem Block (13) verbunden ist, der entlang einer vertikalen Strebe (14) gleiten kann und von einer ersten Kugelumlaufvorrichtung (15) zur Steuerung dieses Kolbens betätigt wird.

3. Eine Anlage nach Anspruch 2, dadurch gekennzeichnet, daß dieses Ventilteil mit einem Ventilschaft (21) ausgestattet ist, der ein Kopfteil (22) einschließt, das mit einem beweglichen Block (23) verbunden ist, der auf dieser vertikalen Strebe gleitet und von einer zweiten Kugelumlaufvorrichtung (25) betätigt wird.

4. Eine Anlage nach Anspruch 3, dadurch gekennzeichnet, daß dieser Ventilschaft (21) dieses Ventilteils an seinem mittleren Bereich mit einer Aussparung (30) ausgestattet ist, die am Auslaß einer Leitung (32), die mit diesem Behälter in Verbindung steht, und am Auslaß einer Leitung (33), die mit diesem Kolben in Verbindung steht, angeordnet werden kann, wobei die letzte Leitung mit der Kammer in Verbindung steht, in der der Kolben gleitet.

5. Eine Anlage nach Anspruch 4, dadurch gekennzeichnet, daß, wenn sich dieser Ventilschaft (21) in der Schließstellung befindet, jegliche Verbindung nach außen unterbunden wird und diese Aussparung (30) so angeordnet ist, daß sie die Leitung (32), die mit diesem Behälter in Verbindung steht, und die Leitung (33), die mit diesem Kolben in Verbindung steht, miteinander verbindet.

6. Eine Anlage nach Anspruch 4, dadurch gekennzeichnet, daß, wenn sich dieser Ventilschaft in der Öffnungsstellung befindet, ein Ende dieses Schaftes die Durchgangsöffnung der Leitung (32), die mit diesem Behälter in Verbindung steht, verschließt und die Durchgangsöffnung der Leitung (33), die mit diesem Kolben in Verbindung steht, freigibt.

7. Eine Anlage nach Anspruch 4, dadurch gekennzeichnet, daß, wenn sich dieser Ventilschaft in einer Entleerungsstellung befindet, das Endteil dieses Schaftes (21) aus dieser Pigmentabgabeöffnung (35) austritt. was mögliche Ablagerungen von dieser Abgabeöffnung beseitigt.

## Revendications

1. Un appareil pour le dosage de pigments pour vernis et d'autres matières de ce genre, comprenant un châssis (1) sur lequel repose un support à plateau tournant (2), supportant de sa part une multiplicité de récipients à pigments (3) dotés d'un dispensateur (4), caractérisé en ce que ledit dispensateur comprend un dispositif à soupape (20) possédant une tige de fermeture (21) susceptible d'être arrangée dans une position de fermeture, dans laquelle le pigment ne peut pas être livré, et dans une position d'ouverture, dans laquelle le pigment peut être livré, et dans une position de drainage, dans laquelle ladite tige saillit partiellement à partir d'une buse de déchargement (35).

2. Un appareil selon la revendication 1, caractérisé en ce que ledit dispensateur comprend un piston (11) pour prélever le pigment destiné à un récipient (3) connexe, ledit piston incluant une barre de piston mobile (12) reliée, à son haut, à un bloc (13) en état de glisser sur un montant (14) et entraîné par un premier dispositif à billes (15) pour commander ledit piston

3. Un appareil selon la revendication 2, caractérisé en ce que ledit dispositif à soupape est doté d'une tige (21) de soupape incluant une partie de tête (22) reliée à un bloc mobile (23) glissant sur ledit montant et entraîné par un second dispositif à billes (25).

4. Un appareil selon la revendication 3, caractérisé en ce que ladite tige (21) dudit dispositif à soupape est dotée, dans une partie intermédiaire, d'une excavation (30) qui peut être arrangée à la sortie d'un conduit (32) relié audit récipient et d'un conduit (33) relié audit piston, ce dernier conduit communiquant avec la chambre dans laquelle glisse ledit piston.

5. Un appareil selon la revendication 4, caractérisé en ce que lorsque ladite tige (21) se trouve dans une position de fermeture, aucune communication avec les ambiances externes peut avoir lieu, et ladite excavation (30) est arrangée de sorte à relier le conduit (32) communiquant avec le récipient au conduit (33) communiquant avec le piston.

6. Un appareil selon la revendication 4, caractérisé en ce que lorsque ladite tige se trouve dans une position d'ouverture, une extrémité de ladite tige ferme l'orifice de passage du conduit (32) communiquant avec le récipient et ouvre le conduit (33) communiquant avec le piston.

7. Un appareil selon la revendication 4, caractérisé en ce que lorsque ladite tige se trouve dans une position de drainage, l'extrémité de ladite tige (21) saillit à partir de l'orifice pour le déchargement du pigment (35), en éliminant d'éventuels résidus dudit orifice de déchargement.
